# FASCICULE DE BREVET EUROPEEN

(11) **EP 2 051 887 B1**
(45) Date de publication et mention de la délivrance du brevet: **13.03.2013**
(21) Numéro de dépôt: 07788369.2
(22) Date de dépôt: 10.08.2007
(51) Int. Cl.: B60T 8/175

(54) **DISPOSITIF D'ANTI-PATINAGE AMÉLIORÉ DES ROUES MOTRICES D'UN VEHICULE ET PROCEDE POUR SA MISE EN OEUVRE**
VERBESSERTE GLEITSCHUTZVORRICHTUNG FÜR DIE ANTRIEBSRÄDER EINES FAHRZEUGS UND AUSFÜHRUNGSVERFAHREN DAFÜR
IMPROVED ANTI-SKID DEVICE FOR THE DRIVING WHEELS OF A VEHICLE AND METHOD FOR REALISING THE SAME

(30) Priorité: 18.08.2006 FR 0607392
(43) Date de publication de la demande: 29.04.2009
(73) Titulaire: Peugeot Citroën Automobiles SA, 78140 Vélizy-Villacoublay (FR); ROBERT BOSCH GMBH, 70442 Stuttgart (DE)
(72) Inventeur: BLAISE, Philippe, F-25490 Dampierre Les Bois (FR); CHARPIN, Emmanuel, F-25420 VOUJEAUCOURT (FR); JOUCGNOUX, Damien, 37130 MAZIERES TOURAINE (FR)
(74) Mandataire: Ménès, Catherine
(86) Numéro de dépôt international: PCT/EP2007/058331
(87) Numéro de publication internationale: WO 2008/022935

(56) Documents cités:
- DE-A1- 4 421 565
- DE-A1- 19 844 467
- DE-A1- 19 933 087
- FR-A1- 2 624 070
- US-A1- 2003 216 850

## Description

La présente invention concerne un système d'anti-patinage des roues motrices des véhicules automobiles, aussi désigné par l'acronyme "ASR" pour "Anti Slip Regulation ou Anti Schlupf Regelung".

Elle concerne plus particulièrement un dispositif d'anti-patinage amélioré des roues motrices et un procédé pour sa mise en oeuvre.

Les systèmes ASR sont destinés notamment à améliorer la prestation de motricité en roulage d'un véhicule automobile sur tout type de terrain.

Avec les systèmes ASR, le contrôle de motricité d'une roue est effectué pour différentes situations de roulage du véhicule notamment en marche avant ou en marche arrière sur des routes ou chemins présentant des portions boueuses, de l'herbe, des ornières, bourbiers (roulage tout chemin), du sable, de la neige ou de la glace et pour différents niveaux de pente et dévers du sol sur lequel évolue le véhicule.

L'amélioration de la motricité est obtenue par ces systèmes dans les limites de la physique, en particulier de l'adhérence disponible des roues sur le sol, du dénivelé du terrain sur lequel se trouve le véhicule ou encore de la garde au sol du véhicule.

Les systèmes ASR sont potentiellement applicables sur tout véhicule à deux roues motrices (4x2) ou quatre roues motrices (4x4) et, avec l'antiblocage de roues ou "ABS", acronyme pour "Anti lock Braking System" en langue anglo-saxonne, ils sont de plus en plus associés à des systèmes de contrôle dynamique de stabilité désignés également par l'acronyme "ESP" pour "Electronic Stability Program ou Elektronisches Stabilität Programm" qui permettent de plus le contrôle de la vitesse de lacet du véhicule.

Tous ces systèmes permettent de faire évoluer de manière significative la sécurité des passagers et la prestation de motricité des véhicules.

Les dispositifs anti-patinage apportent en outre une aide précieuse aux conducteurs novices comme aux conducteurs expérimentés.

La demande de brevet US2003/216850 décrit un procédé de régulation d'anti-patinage à l'entrainement lors du démarrage d'un véhicule sur une chaussée présentant des coefficients d'adhérence différents selon le côté du véhicule, procédé selon lequel on détermine le régime moteur à l'instant du démarrage du véhicule, calcule une valeur de glissement de consigne corrigée sur la base de ce régime moteur déterminé et abaisse ou augmente brusquement le glissement de consigne pour passer à la valeur calculée.

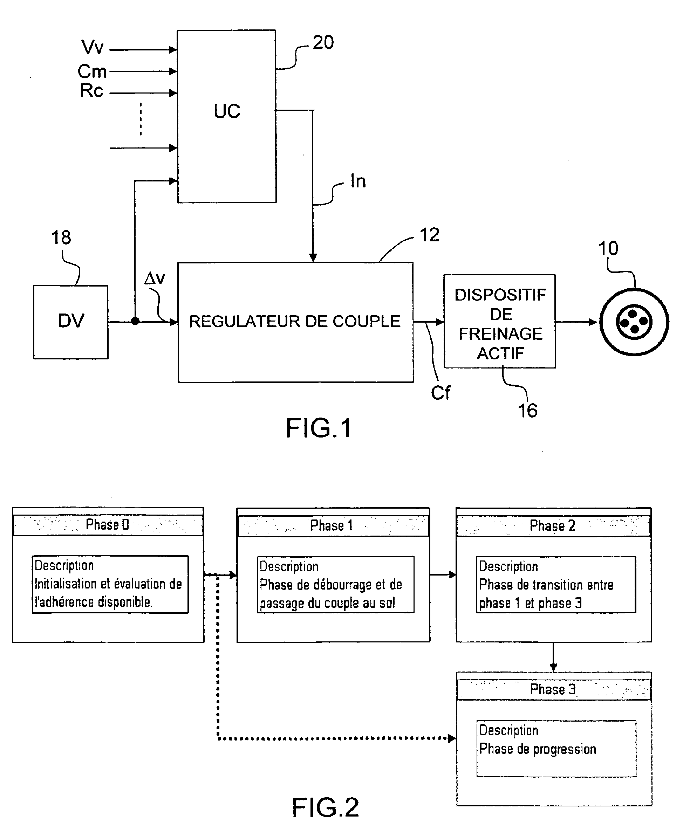

La figure 1 représente un synoptique de base d'un système ASR 10 de l'état de l'art.

Le système ASR de la figure 1 comporte notamment :
- un régulateur de couple 12 fournissant une information de commande Cf à un dispositif de freinage actif 16 agissant sur une roue motrice 10 ;
- une unité de commande 20 fournissant au régulateur de couple 12 des informations d'initialisation In de la régulation ; et
- un détecteur DV 18 fournissant au régulateur de couple 12 des informations d'écart des variables Δv de conduite du véhicule.

L'unité de commande 20 reçoit différents types d'informations relatives au véhicule à un instant donné telles que la vitesse du véhicule Vv, l'adhérence Rc, le couple moteur Cm, ... et fournit l'information d'initialisation In au régulateur de couple 12.

Le régulateur de couple 12 comporte habituellement un régulateur proportionnel fournissant des informations de commande au dispositif de freinage actif 16, proportionnelles aux écarts des variables, et un intégrateur de régulation recevant l'information d'initialisation de l'unité de commande 20. Le régulateur proportionnel et l'intégrateur de régulation sont réalisés au moyen de composants logiciels implémentant respectivement des algorithmes de traitement pour chacune des roues motrices 10 du véhicule

Le véhicule comporte en outre des capteurs (non représentés sur la figure 1) fournissant les informations à l'unité de commande 20.

De tels systèmes ASR de l'état de l'art équipent actuellement des véhicules tout terrain (4x4) mais comportent des défauts et insuffisances.

Pour souligner ces insuffisances, nous allons considérer différentes situations d'évolution de l'automobile sur le terrain que nous appellerons par la suite "situations de vie".

Nous utiliserons aussi par la suite le terme "décollage" pour définir le passage du véhicule d'une situation où le véhicule est à l'arrêt (vitesse nulle) vers une situation de démarrage du véhicule (vitesse non nulle).

Un véhicule peut évoluer sur deux principales catégories de terrains :
- terrains à faible adhérence, par exemple comportant du sable, des graviers, de la neige, de la glace ;
- terrains à forte adhérence comme les pistes ou routes en asphalte humide ou en asphalte sec.

Nous allons considérer les deux principaux types de situations de vie suivants A et B :

### A - Premier type de situations de vie sur des terrains d'évolution du véhicule à faible ou forte adhérence :

- décollage à plat du véhicule sur faible, moyenne et haute adhérence homogène ou dissymétrique ;
- décollage en pente et/ou en dévers sur faible, moyenne et haute adhérence ;
- décollage en pente et/ou en dévers sur faible, moyenne et ,haute adhérence homogène ou dissymétrique, roues braquées.

Le fonctionnement, dans ce premier type A de situations de vie, des systèmes ASR de l'état de l'art produisent un contrôle immédiat du moteur et des freins pour permettre de ramener les deux (4x2) ou les quatre (4x4) roues du véhicule sur une consigne fixe quelle que soit l'adhérence, la pente et/ou le dévers du terrain.

L'impact sur le véhicule, ressenti par le conducteur, est le suivant :
- pour une faible adhérence, on a une absence de motricité, et le véhicule est difficilement contrôlable ;
- pour une haute adhérence, on a une importante coupure moteur qui pénalise la vitesse de décollage.

### B - Deuxième type de situations de vie sur des terrains d'évolution du véhicule à faible adhérence :

- progression du véhicule sur terrain en pente et/ou en dévers sur faible, moyenne adhérence, homogène ou dissymétrique.

Le fonctionnement actuel, dans ce deuxième type B de situations de vie, des systèmes ASR de l'état de l'art, produisent une régulation du couple transmis aux deux (4x2) ou aux quatre roues (4x4) autour d'une consigne faible et fixe qui peut être augmentée lorsqu'il y a, par exemple détection de neige profonde, assurant ainsi la robustesse de la détection.

L'impact sur le véhicule, ressenti par le conducteur, est le suivant :
- pour une faible adhérence, on a une absence de motricité et une sensation de frustration pour le conducteur du véhicule ;
- dans la boue, suivant le taux d'humidité, la structure des pneus peut se remplir de boue et ne plus transmettre l'adhérence disponible.

Un des principaux objectifs de l'invention est d'obtenir un meilleur contrôle du véhicule par la recherche permanente de la motricité sur tout type de sol ou terrains.

Un autre objectif de l'invention est la recherche d'une conduite d'un véhicule plus sure et aisée notamment pour les personnes peu expérimentées à une conduite tout terrain.

A cet effet et afin de pallier les inconvénients des systèmes de l'état de l'art, l'invention propose un dispositif d'anti-patinage des roues motrices d'un véhicule, notamment d'un véhicule automobile, comportant :
- un dispositif de freinage actif des roues motrices ;
- un régulateur de couple fournissant un signal de commande (Cf) au dispositif de freinage actif en fonction d'informations d'écarts de régulation (Δv) par rapport à une consigne de régulation déterminée ;
- une unité de commande fournissant au régulateur de couple une information d'initialisation (In) de la régulation ;
- des moyens pour fournir l'information d'initialisation (In) de la régulation à partir de paramètres d'évolution du véhicule sur tout terrain, tels que l'adhérence et la vitesse des roues motrices, la pente et/ou le dévers du terrain ;
- des moyens pour fournir l'information d'initialisation (In) de la régulation à partir d'informations d'action du conducteur sur un ou des éléments de commandes du véhicule,
caractérisé en ce que le régulateur de couple comporte des moyens de choix d'une première roue motrice à freiner (appelée roue lente), lors d'une phase de démarrage du véhicule, pour obtenir de la motricité, au moins une autre roue motrice participant à la traction du véhicule n'étant pas freinée pour augmenter son adhérence au sol.

Dans une réalisation, la première roue motrice qui est freinée et l'autre roue motrice qui n'est pas freinée sont disposées respectivement aux extrémités libres d'un même essieu.

Dans une autre réalisation, la première roue motrice qui est freinée et l'autre roue motrice qui n'est pas freinée sont des roues directrices.

Dans une autre réalisation, le régulateur de couple comporte des moyens de détermination de la meilleure accélération possible (accélération optimisée) en fonction des paramètres d'évolution du véhicule et d'informations d'action du conducteur sur un ou des éléments de commandes du véhicule.

L'invention concerne aussi un procédé pour la mise en oeuvre du dispositif décrit ci-dessus.

Le procédé est caractérisé en ce qu'il comporte des étapes de :
- fourniture, par le régulateur de couple, d'un signal de commande du répartiteur de couple en fonction d'informations d'écarts de régulation par rapport à une consigne de régulation de vitesse des roues ;
- fourniture, par l'unité de commande, d'une information d'initialisation de la régulation à partir de paramètres d'évolution du véhicule sur le sol, tels que l'adhérence et la vitesse des roues, la pente et/ou dévers du terrain.

Avantageusement l'étape de fourniture de l'information d'initialisation de la régulation est réalisée, en outre, à partir d'informations d'action du conducteur sur des éléments de commandes du véhicule révélatrice de la volonté du conducteur.

Dans une réalisation, le procédé selon l'invention comporte au moins :
- une phase (Phase 0) d'analyse/évaluation de l'adhérence et de la vitesse des roues motrices, de la pente et/ou du dévers du terrain et de la volonté du conducteur;
- une phase (Phase1) de démarrage (décollage) du véhicule consistant à choisir une première roue motrice à freiner, ou roue lente, pour avoir de la motricité, au moins une autre roue motrice participant à la traction, n'étant pas freinée pour assurer l'évacuation de corps étrangers réduisant l'adhérence de ladite roue et profiter de la vitesse de rotation de cette roue pour creuser le sol et retrouver de l'adhérence et donc de la motricité;

- une phase de progression (Phase 3) comportant :
- une diminution de la consigne de régulation de vitesse, élevée au départ sur glissement de la roue, pour trouver la meilleure accélération possible,
- détermination de l'accélération cible du véhicule voulu par le conducteur et régulation autour de ce point d'accélération.

Par glissement (ou taux de glissement), on entend généralement le taux de patinage de la roue en fonction de la vitesse du véhicule.

Dans une réalisation du procédé, où les roues motrices considérées sont des roues directrices disposées sur le même essieu, en absence de pente et/ou de dévers et lorsque les roues sont droites ou forment un angle de braquage α inférieur à une valeur prédéterminée αb (α ≤ αb), la roue ayant la plus faible vitesse est considérée comme étant la roue la plus lente (RIO).

Dans une autre réalisation du procédé, où les roues motrices considérées sont des roues directrices disposées sur le même essieu, en absence de pente et/ou de dévers, lorsque les roues sont braquées à partir d'un certain angle de braquage ( α > αb ), la roue extérieure (Rext) est choisie comme roue lente afin de ne pas générer plus de sous virage, la roue extérieure étant la roue la plus éloignée du point théorique de rotation du véhicule.

Dans une autre réalisation, où les roues motrices considérées sont des roues directrices disposées sur le même essieu, en présence de pente et/ou de dévers, AX exprimant l'accélération longitudinale selon un axe X longitudinal du véhicule et AY exprimant l'accélération selon un axe Y perpendiculaire à l'axe X, AX et AY pouvant prendre des valeurs positives ou négatives, le procédé comporte une étape de calcul du signe du produit AX *AY et de détermination de la roue lente :
- si le produit AX*AY est positif, la roue droite Rdr est choisie comme roue lente (Rlente = Rdr),
- si le produit AX*AY est négatif, la roue gauche Rgr est choisie comme roue lente (Rlente = Rgr), le changement de roue n'étant possible que si :
- le signe du produit (AX*AY) s'inverse.
- un critère de stabilité de roue n'est pas rempli.

Il y a ainsi inversion entre roue lente et roue rapide.

Le dispositif de régulation de traction selon l'invention est configuré pour assurer des nouvelles fonctionnalités par rapport au dispositif anti-patinage de l'état de l'art et notamment :
- l'implémentation de lois de commande spécifiques pour la gestion des situations de vie du véhicule selon quatre phases : Phase 0, Phase 1, Phase 2 et Phase 3 ; la phase 2 étant une phase de transition ;
- l'implémentation de lois de commande spécifiques de la gestion du taux de patinage avec prise en compte de la volonté du conducteur.

L'invention sera mieux comprise à l'aide d'exemples de réalisation du dispositif selon l'invention en référence aux dessins indexés dans lesquels :
- la figure 1, déjà décrite, représente un synoptique de base d'un système ASR de l'état de l'art ;
- la figure 2 montre un synoptique de différentes phases du procédé anti-patinage selon l'invention ;
- la figure 3 montre un organigramme des phases du procédé de mise en oeuvre du dispositif selon l'invention ;
- la figure 4 montre l'évolution dans le temps des vitesses des roues droites et gauches ainsi que la vitesse du véhicule en fonction de l'angle du volant actionné par le conducteur ;
- la figure 5 montre un tableau de choix de la roue lente par le procédé selon l'invention en cas de pente et/ou de dévers ;
- la figure 6 montre un exemple d'évolution dans le temps de la variation des vitesses des roues ainsi que la vitesse du véhicule lors de changement de roue et ;
- la figure 7 montre un synoptique montrant différentes étapes de la phase 3 du procédé selon l'invention.

La description qui va suivre s'appuie sur un exemple de véhicule à deux roues motrices (4x2).

Toutefois, l'invention n'est pas limitée aux seuls véhicules à deux roues motrices (4x2) mais peut également s'appliquer à des véhicules à quatre roues motrices (4x4).

La figure 2 montre un organigramme des trois phases Phase 0, Phase 1, Phase 2 et Phase 3 des nouvelles fonctionnalités du procédé selon l'invention et l'interconnexion entre chaque phase.

La phase 0 est une phase d'analyse/évaluation de la vitesse et de l'adhérence des roues sur le sol, de la pente et/ou du dévers du terrain et de la volonté du conducteur.

La phase 1 est une phase de démarrage du véhicule (ou de décollage). Elle se traduit par le choix d'une roue qui doit être freinée pour avoir de la motricité en utilisant au maximum l'adhérence disponible et de passer le couple au sol via cette roue (on choisira la vitesse de roue la plus lente possible, sans glissement, c'est-à-dire que la roue lente est à la vitesse du véhicule), l'autre roue n'étant pas freinée.

Cette phase 1 a pour principaux objectifs :
- d'évacuer la boue qui se trouve sur le pneu de la roue rapide, afin de permettre au pneu de retrouver de l'adhérence ;
- de profiter de la vitesse de rotation de cette roue pour creuser le sol et retrouver de l'adhérence ; et
- de passer du couple par adhérence avec la roue lente.

La phase 2 est une phase de transition entre la phase 1 et la phase 3.

La phase 3 est une phase de progression qui consiste :
- à diminuer la vitesse de consigne, qui est élevée au départ « sur glissement », afin de trouver la meilleure accélération possible ;
- et lorsqu'elle est obtenue, à déterminer l'accélération cible voulue par le conducteur ; et
- à réguler la vitesse autour de ce point.

Si le conducteur accélère, la vitesse de consigne est augmentée pour rechercher la meilleure accélération.

Si le conducteur relâche la pédale d'accélérateur tout en restant en mode ASR, la vitesse de consigne est diminuée pour rechercher à nouveau la meilleure accélération.

Dans le cas idéal d'un démarrage avec une même adhérence des roues et l'obtention de l'accélération souhaitée par le conducteur, le procédé selon l'invention effectue un passage directement de la phase 0 à la phase 3 de progression du véhicule.

Nous allons décrire par la suite les phases du procédé selon l'invention, en fonction des différentes situations de vie.

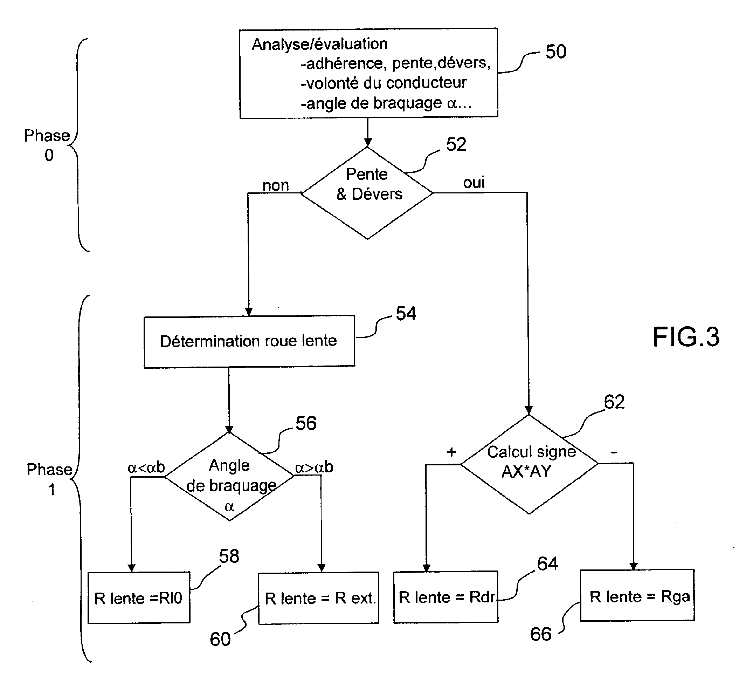

La figure 3 montre un organigramme des différentes phases du procédé selon l'invention :
Dans la phase 0, le procédé comporte une étape d'analyse/évaluation 50 des conditions de roulage du véhicule suivi d'une étape de détermination 52 de la présence ou non de pente et/ou du dévers du terrain.

De façon connue, des accéléromètres, sensibles aux accélérations longitudinale, transversale et de lacet du véhicule, et autres détecteurs de pente, sont utilisés pour déterminer la situation de pente et/ou de dévers du terrain sur lequel évolue le véhicule.

Egalement de façon connue, des capteurs de vitesse des roues, associés aux roues, permettent de déterminer la roue ayant la plus faible vitesse.

Dans la phase 1, le procédé détermine la roue lente selon le résultat de présence « oui » ou « non » de pente et/ou du dévers.

On distingue alors deux cas de figures A et B :
Dans le cas A, si le résultat est « non » (absence de pente et/ou de dévers), on se trouve alors dans le premier cas de détermination de la roue lente (étape 54).

Dans ce cas, le procédé de détermination 54 comporte une étape de détermination de l'angle de braquage α (étape 56) des roues avec deux conditions 1 et 2 :
1- lorsque les roues sont droites ou forment un angle de braquage α inférieur à une valeur prédéterminée αb ( α ≤ αb ), la roue ayant la plus faible vitesse (ou la plus lente) déterminée lors de la phase 0 d'analyse/évaluation (étape 50) est considérée comme étant la roue la plus lente RI0 (RIent = RI0) (étape 58), en phase 1 pour deux raisons :
   - cette roue est susceptible de faire passer le couple au sol ;
   - la roue rapide a une forte probabilité d'avoir déjà creusé le sol et aura donc un effort en couple supplémentaire à fournir pour surmonter l'obstacle créé après creusement du sol.
2- lorsque les roues sont braquées à partir d'un angle de braquage déterminé ( α > αb ), la roue extérieure Rext (Rlente = Rext) 60 est choisie comme roue lente afin de ne pas générer plus de sous virage.

On considère comme roue extérieure la roue la plus éloignée du point théorique de rotation du véhicule.

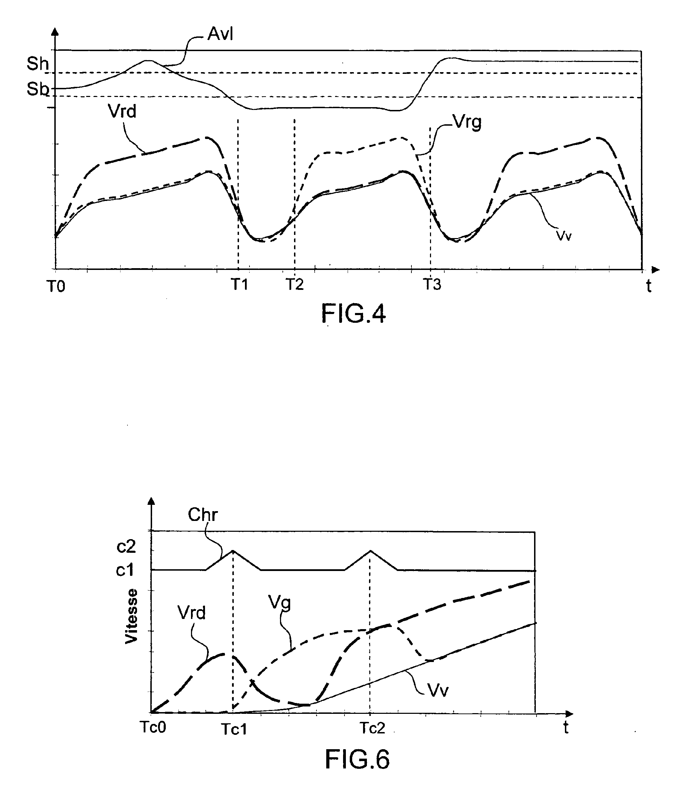

La figure 4 montre l'évolution dans le temps des vitesses des roues droites Vrd et gauches Vrg ainsi que la vitesse du véhicule Vv en fonction de l'angle du volant Avl (angle de braquage) actionné par le conducteur de l'automobile.

Lorsque le volant est tourné vers la gauche (seuil Sh de αb dépassé par le haut), la roue droite Vrd est plus rapide que la roue gauche Vrg plus lente (temps T0- T1). Puis lorsque le volant est tourné de la gauche vers la droite (seuil Sb αb dépassé par le bas), la roue gauche Vrg devient plus rapide que la roue droite Vrd (temps T2-T3) en passant par une période transitoire de temps (T1-T2) ou les deux roues ont sensiblement la même vitesse. La vitesse du véhicule diminue temporairement pendant cette période transitoire (T1-T2).

Dans le cas B, correspondant au choix de la roue lente dans les situations de présence de pente et/ou dévers :
Si le résultat de l'étape 52 est « oui » (voir figure 3), le procédé comporte une étape de calcul du signe 62 du produit AX*AY et de détermination de la roue lente :
   où AX exprime l'accélération longitudinale selon un axe X longitudinal du véhicule et AY exprimant l'accélération selon un axe Y perpendiculaire à l'axe X ; AX et AY pouvant prendre respectivement des valeurs positives ou négatives.
      - si le produit AX*AY est positif, la roue droite Rdr est choisie comme roue lente (Rlente = Rdr) (étape 64),
      - si le produit AX*AY est négatif, la roue gauche Rgr est choisie comme roue lente (Rlente = Rgr) (étape 66),

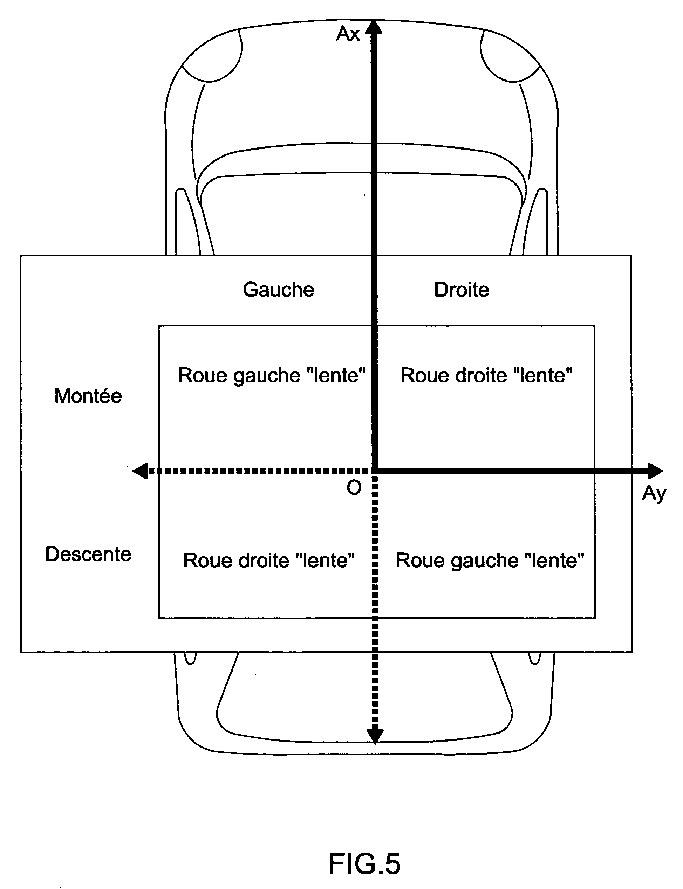

La figure 5 montre un tableau de choix de la roue lente par le procédé selon l'invention en cas de pente et/ou de dévers.

En évolution sur le terrain, le signe des pentes AX et dévers AY peut changer. Le changement de signe peut entraîner le changement du choix de la roue lente ; le choix pouvant être conditionné par des priorités.

Suivant un ordre croissant des priorités, le changement de roue n'est possible que si :
1/ le signe de la multiplication (AX*AY) s'inverse.
2/ le critère de stabilité de roue n'est pas rempli.

Le critère de stabilité des roues est estimé sur un temps T comme suit :
a) si la Vitesse de roue lente = Vitesse de roue rapide, le sol est dur donc autorisation d'inversion du choix de la roue lente.
b) si la Vitesse de roue lente < Vitesse de roue rapide, le sol est meuble et donc pas d'autorisation d'inversion de roue.
c) si la Vitesse véhicule = 0 et T1= T en ms et roue lente stable alors changement de roue.

Le critère de stabilité de roue peut être aussi déterminé comme suit :
d) si la vitesse de la roue lente est égale à la vitesse de la roue rapide pendant un certain temps dépendant de la pente, alors le sol permet le passage du couple et il y a inversion du choix de la roue lente,
e) si les deux vitesses des roues lente et rapide sont sur leurs consignes de vitesse pendant un certain temps dépendant de la pente, alors le sol est non adhérent et il y a changement de roue,
f) si la vitesse du véhicule est égale à 0 sur un temps supérieur à une valeur prédéterminée en secondes le changement de roue est imposé.

La figure 6 montre un exemple de l'évolution de la variation des vitesses des roues ainsi que la vitesse du véhicule lors de changement de roue (Phase 1).

Entre un temps initial Tc0 et un temps suivant Tc1, la vitesse de la roue droite Vrd croit, la vitesse de la roue gauche Vrg reste stable et inférieure à la vitesse de la roue droite, la vitesse du véhicule est nulle.

Au temps Tc1, le changement de roue est autorisé, représenté à la figure 6 par le passage de l'indicateur Chr de c1 à c2, puis retour à c1. La vitesse de la roue droite Vrd diminue alors que celle Vrg de la roue gauche augmente. La vitesse Vv du véhicule commence à augmenter.

Au temps suivant Tc2, les vitesses des roues devenant égales, un nouveau changement de roue est effectué représenté par un nouveau passage de l'indicateur Chr de c1 à c2 puis retour à c1. La vitesse du véhicule Vv continue d'augmenter vers une valeur souhaitée par le conducteur.

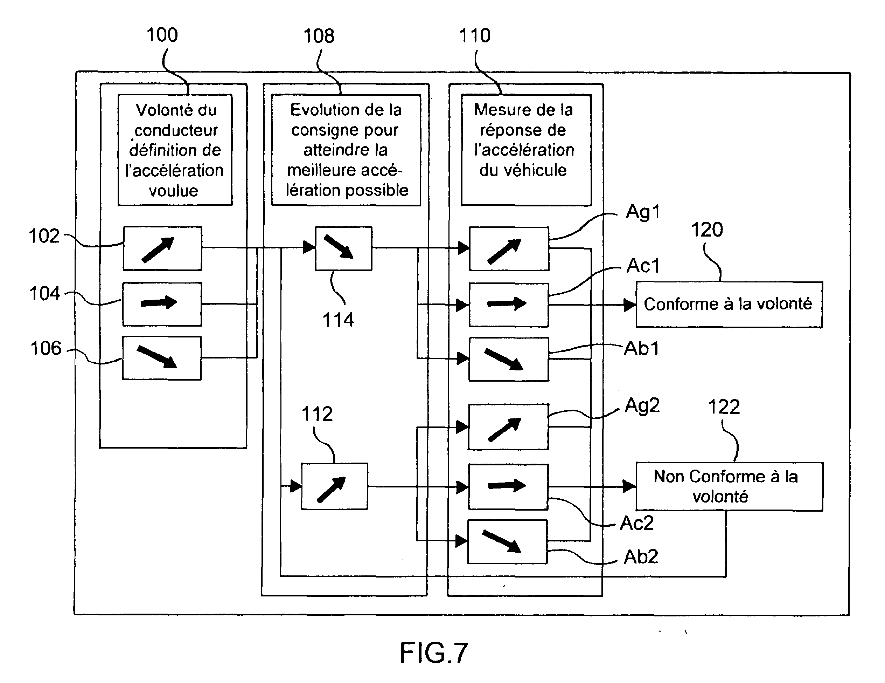

La figure 7 montre un synoptique montrant les différentes étapes de la phase 3 du procédé selon l'invention.

Dans une étape 100, le procédé tient compte de la volonté du conducteur 100 par la définition de l'accélération voulue et dans cette étape :
le conducteur accélère 102, maintient l'accélération 104, ou décélère 106 ;

Dans une étape 108, le procédé fait évoluer la consigne de vitesse pour atteindre la meilleure accélération possible soit une augmentation de la consigne 112, soit une diminution de la consigne 114.

Par meilleure accélération possible, on entend une accélération optimisée pour correspondre à un compromis entre la volonté du conducteur et l'état du véhicule.

Dans une étape 110, le procédé mesure la réponse de l'accélération du véhicule selon que la consigne diminue 114 ou augmente 112, et la réponse est, soit une augmentation de l'accélération Ag1ou Ag2, soit une accélération constante Ac1 ou Ac2 soit une diminution de l'accélération Ab1 ou Ab2.

A l'étape 120, la mesure de la réponse de l'accélération du véhicule est conforme à la volonté du conducteur.

A l'étape 122, si la mesure de la réponse de l'accélération du véhicule n'est pas conforme à la volonté du conducteur, le procédé change la valeur de la consigne 112, 114 pour obtenir la réponse de l'accélération voulue.

Les résultats obtenus par un véhicule équipé avec le dispositif selon l'invention dans différentes situations de vie sont :
1/ En situation de décollage :
   - sur faible adhérence, recherche permanente de la motricité (Phase 1). Le véhicule reste contrôlable grâce à la stratégie du choix de la roue motrice à freiner en fonction de l'angle volant (angle de braquage), de la pente et/ou du dévers.
   - sur haute adhérence, plus de coupure moteur.
2/ En progression :
   Sur faible adhérence, motricité et dirigeabilité importante. Plus de sensation de frustration.

Dans la boue, recherche permanente de la motricité.

On notera que bien que l'invention ait été décrite principalement dans le cas d'un dispositif agissant sur le freinage des roues motrices (répartiteur de freinage), un autre type de dispositif, notamment du type différentiel dissymétrique, piloté de manière à répartir le couple sur les roues motrices du véhicule, rentre également dans le champ d'application de la présente invention.

## Revendications

1. Procédé d'anti patinage des roues motrices d'un véhicule, notamment d'un véhicule automobile, comportant :
- une étape de fourniture par un régulateur de couple d'un signal de commande (Cf) à un répartiteur de roue en fonction d'informations d'écarts de régulation (Δv) par rapport à une consigne de régulation de vitesse des roues ;
- une étape de fourniture par une unité de commande (20) d'une information d'initialisation (In) de la régulation à partir de paramètres d'évolution du véhicule sur le sol, tels que l'adhérence et la vitesse des roues, la pente et/ou le dévers du terrain, l'étape de fourniture de l'information d'initialisation (In) de la régulation étant réalisée, en outre, à partir d'informations d'action du conducteur sur des éléments de commande du véhicule ;
- une phase d'analyse/évaluation (50) de l'adhérence, et de la vitesse des roues, de la pente et/ou du dévers, et de la volonté du conducteur (Phase 0), **caractérisé en ce qu'**il comporte en outre
- une phase de démarrage du véhicule (Phase 1) consistant à choisir une roue motrice à freiner, ou roue lente (58, 60, 64, 66), pour avoir de la motricité, au moins une autre roue motrice, participant à la traction du véhicule n'étant pas freinée pour assurer l'évacuation de corps étrangers réduisant l'adhérence de ladite roue et profiter de la vitesse de rotation de cette roue pour creuser le sol et retrouver de l'adhérence ;
- une phase de progression (Phase 3) par :
- une diminution de la consigne de régulation de vitesse, élevée au départ sur glissement de la roue, pour trouver la meilleure accélération possible,
- la détermination de l'accélération cible du véhicule voulue par le conducteur et régulation autour de ce point d'accélération.

2. Procédé selon la revendication 1, **caractérisé en ce qu'**en absence de pente et/ou de dévers et lorsque les roues sont droites ou forment un angle de braquage (α), inférieur à une valeur prédéterminée, la roue ayant la plus faible vitesse est considérée comme étant la roue la plus lente (RIO) (58).

3. Procédé selon la revendication 1, **caractérisé en ce qu'**en absence de pente et/ou de dévers, lorsque les roues sont braquées à partir d'un certain angle de braquage (α), la roue extérieure (Rext) (60) est choisie comme roue lente afin de ne pas générer plus de sous virage, la roue extérieure étant la roue la plus éloignée du point théorique de rotation du véhicule.

4. Procédé selon la revendication 1, **caractérisé en ce qu'**en présence de pente et/ou de dévers, AX exprimant l'accélération longitudinale selon un axe X longitudinal du véhicule et AY exprimant l'accélération selon un axe Y perpendiculaire à l'axe X, AX et AY pouvant prendre des valeurs positives ou négatives, le procédé comporte une étape de calcul (62) du signe du produit AX *AY et de détermination de la roue lente :
- si le produit AX*AY est positif, la roue droite (Rdr) est choisie comme roue lente (Rlente = Rdr) (64),
- si le produit AX*AY est négatif, la roue gauche (Rgr) est choisie comme roue lente (Rlente = Rgr) (66), le changement de roue n'étant possible que si :
- le signe de la multiplication (AX*AY) s'inverse,
- un critère de stabilité de roue n'est pas rempli.

5. Procédé selon la revendication 4, **caractérisé en ce que** le critère de stabilité des roues est estimé sur un temps T comme suit :
a) si la Vitesse de roue lente = Vitesse de roue rapide, le sol est dur donc autorisation d'inversion du choix de la roue lente.
b) si la Vitesse de roue lente < Vitesse de roue rapide, le sol est meuble et donc pas d'autorisation d'inversion de roue.
c) si la Vitesse véhicule = 0 et T1 = T en ms et roue lente stable alors changement de roue.

6. Procédé selon la revendication 4, **caractérisé en ce que** le critère de stabilité de roue est déterminé comme suit :
d) si la vitesse de la roue lente est égale à la vitesse de la roue rapide pendant un certain temps dépendant de la pente, alors le sol permet le passage du couple et il y a inversion du choix de la roue lente,
e) si les deux vitesses des roues lente et rapide sont sur leurs consignes de vitesse pendant un certain temps dépendant de la pente, alors le sol est non adhérent et il y a changement de roue,
f) si la vitesse du véhicule est égale à 0 sur un temps supérieur à une valeur prédéterminée en secondes le changement de roue est imposé.

7. Dispositif d'anti patinage, **caractérisé en ce qu'**il comporte des moyens de mise en oeuvre du procédé selon l'une quelconque des revendications précédentes.

8. Véhicule automobile, **caractérisé en ce qu'**il comporte des moyens de mise en oeuvre du procédé selon l'une quelconque des revendications 1 à 6.

## Claims

1. An anti-skid method for the driving wheels of a vehicle, in particular of a motor vehicle, comprising:
- a supply step by a torque regulator of a control signal (Cf) to a wheel distributor as a function of information on regulation deviations (Δv) with respect to a wheel speed regulation setpoint;
- a supply step by a control unit (20) of a regulation initialization information (In) from parameters for vehicle travel on the ground, such as the adherence and the speed of the wheels, the slope and/or the slant of the terrain, the supply step of regulation initialization information (In) being realized, furthermore, from information about the action of the driver on control elements of the vehicle;
- an analysis/evaluation phase (50) of the adherence and of the speed of the wheels, of the slope and/or the slant, and of the intention of the driver (Phase 0), **characterized in that** it further comprises:
- a starting phase of the vehicle (Phase 1) consisting in selecting a driving wheel to brake, or slow wheel (58, 60, 64, 66), to have motivity, at least one other driving wheel, participating in the traction of the vehicle not being braked to ensure the evacuation of foreign bodies reducing the adherence of the said wheel and to make use of the rotation speed of this wheel to dig into the ground and re-establish the adherence;
- a progression phase (Phase 3) by:
- a reduction of the speed regulation setpoint, which is initially high on sliding of the wheel, to find the best possible acceleration,
- the determining of the target acceleration of the vehicle desired by the driver and regulating around this acceleration point.

2. The method according to Claim 1, **characterized in that** in the absence of a slope and/or slant and when the wheels are straight or form a steering angle (α) less than a predetermined value, the wheel having the lowest speed is considered as being the slowest wheel (RIO) (58).

3. The method according to Claim 1, **characterized in that** in the absence of a slope and/or slant, when the wheels are steered from a certain steering angle (α), the outer wheel (Rext) (60) is selected as slow wheel so as not to generate more understeering, the outer wheel being the wheel furthest away from the theoretical rotation point of the vehicle.

4. The method according to Claim 1, **characterized in that** in the presence of a slope and/or slant, AX expressing the longitudinal acceleration along a longitudinal axis X of the vehicle and AY expressing the acceleration along an axis Y perpendicular to the axis X, AX and AY being able to take positive or negative values, the method comprises a calculation step (62) of the sign of the product AX*AY and for determination of the slow wheel:
- if the product AX*AY is positive, the right wheel (Rdr) is selected as the slow wheel (Rlente = Rdr) (64),
- if the product AX*AY is negative, the left wheel (Rgr) is selected as the slow wheel (Rlente = Rgr) (66), the change of wheel only being possible if:
- the sign of the multiplication (AX*AY) reverses,
- a wheel stability criterion is not fulfilled.

5. The method according to Claim 4 **characterized in that** the stability criterion of the wheels is estimated over a time T as follows:
a) if the slow wheel speed = the fast wheel speed, the ground is hard, hence authorization of inversion of the selection of the slow wheel.
b) if the slow wheel speed < the fast wheel speed, the ground is soft and hence no authorization of wheel inversion.
c) if the vehicle speed = 0 and T1 = T in ms and the slow wheel is stable, therefore change of wheel.

6. The method according to Claim 4, **characterized in that** the wheel stability criterion is determined as follows:
d) if the speed of the slow wheel is equal to the speed of the fast wheel for a certain time depending on the slope, then the ground permits the transfer of the torque and there is inversion of the selection of the slow wheel,
e) if the two speeds of the slow and fast wheels are at their speed setpoints for a certain time depending on the slope, then the ground is non-adherent and there is a change of wheel,
f) if the speed of the vehicle is equal to 0 over a time greater than a predetermined value in seconds, the change of wheel is imposed.

7. An anti-skid device, **characterized in that** it comprises means for implementation of the method according to any one of the preceding claims.

8. A motor vehicle, **characterized in that** it comprises means for implementation of the method according to any one of Claims 1 to 6.

## Patentansprüche

1. Gleitschutzverfahren der Antriebsräder eines Fahrzeugs, insbesondere eines Kraftfahrzeugs, aufweisend:
- einen Schritt des Bereitstellens durch einen Momentregler eines Steuersignals (Cf) zu einem Radverteiler in Abhängigkeit von Steuerungsabweichungsinformationen (Δv) in Bezug auf einen Drehzahlsteuerungssollwert der Räder,
- einen Schritt des Bereitstellens durch eine Steuereinheit (20) einer Initialisierungsinformation (In) der Steuerung ausgehend von Fahrparametern des Fahrzeugs auf dem Boden, wie zum Beispiel die Haftung und die Drehzahl der Räder, das Gefälle und/oder die Schräglage des Geländes, wobei der Schritt des Bereitstellens der Initialisierungsinformation (In) der Steuerung ferner ausgehend von Betätigungsinformationen des Fahrers auf Steuerelementen des Fahrzeugs ausgeführt wird,
- eine Analyse-/Beurteilungsphase (50) der Haftung und der Drehzahl der Räder, des Gefälles und/oder der Schräglage und des Wunsches des Fahrers (Phase 0), **dadurch gekennzeichnet, dass** es ferner aufweist
- eine Startphase des Fahrzeugs (Phase 1), die darin besteht, ein zu bremsendes Antriebsrad oder langsames Rad (58, 60, 64, 66) auszuwählen, um Antriebskraft zu haben, wenigstens ein anderes Antriebsrad, das an der Traktion des Fahrzeugs beteiligt ist, das nicht gebremst ist, um die Eliminierung von Fremdkörpern sicherzustellen, die die Haftung des Rads verringern, und um von der Drehzahl dieses Rads zu profitieren, um den Boden auszuhöhlen und wieder Haftung zu finden,
- eine Fortschrittsphase (Phase 3) durch:
- eine Verringerung des Drehzahlsteuerungssollwerts, der zu Beginn beim Gleiten des Rads hoch ist, um die bestmögliche Beschleunigung zu finden,
- Bestimmen der Zielbeschleunigung des Fahrzeugs, die der Fahrer wünscht, und Steuern um diesen Beschleunigungspunkt.

2. Verfahren nach Anspruch 1, **dadurch gekennzeichnet, dass** bei Fehlen von Gefälle und/oder Schräglage und wenn die Räder gerade stehen oder einen Einschlagwinkel (α) kleiner als ein vorbestimmter Wert bilden, das Rad, das die niedrigste Drehzahl hat, als das langsamste Rad (RIO) (58) betrachtet wird.

3. Verfahren nach Anspruch 1, **dadurch gekennzeichnet, dass** bei Fehlen von Gefälle und/oder Schräglage, wenn die Räder ausgehend von einem bestimmten Einschlagwinkel (α) eingeschlagen sind, das äußere Rad (Rext) (60) als langsames Rad ausgewählt wird, um nicht mehr Untersteuern zu erzeugen, wobei das äußere Rad das am weitesten von dem theoretischen Drehpunkt des Fahrzeugs entfernte ist.

4. Verfahren nach Anspruch 1, **dadurch gekennzeichnet, dass** bei Vorliegen von Gefälle und/oder Schräglage AX die Längsbeschleunigung entlang einer Längsachse X des Fahrzeugs ausdrückt und AY die Beschleunigung entlang einer Achse Y senkrecht zu der Achse X ausdrückt, wobei AX und AY positive oder negative Werte annehmen können, das Verfahren einen Berechnungsschritt (62) des Vorzeichens des Produktes von AX*AY und des Bestimmens des langsamen Rads aufweist:
- wenn das Produkt AX*AY positiv ist, wird das rechte Rad (Rdr) als langsames Rad (Rlente = Rdr) (64) ausgewählt,
- wenn das Produkt AX*AY negativ ist, wird das linke Rad (Rgr) als langsames Rad (Rlente = Rgr) (66) ausgewählt, wobei der Radwechsel nur möglich ist, wenn:
- sich das Vorzeichen der Multiplikation (AX*AY) umkehrt,
- ein Radstabilitätskriterium nicht erfüllt wird.

5. Verfahren nach Anspruch 4, **dadurch gekennzeichnet, dass** das Stabilitätskriterium der Räder über eine Zeit T wie folgt geschätzt wird:
a) bei langsamer Raddrehzahl = schnelle Raddrehzahl, ist der Boden hart, daher Genehmigung zum Umkehren der Auswahl des langsamen Rads.
b) bei langsamer Raddrehzahl < schnelle Raddrehzahl, ist der Boden locker und daher keine Genehmigung zum Umkehren der Auswahl des Rads.
c) bei Fahrzeuggeschwindigkeit = 0 und T1 = T in ms und beständig langsamem Rad, Radwechsel.

6. Verfahren nach Anspruch 4, **dadurch gekennzeichnet, dass** das Radstabilitätskriterium wie folgt bestimmt wird:
d) wenn die langsame Raddrehzahl während einer bestimmten Zeit, die von dem Gefälle abhängt, gleich der schnellen Raddrehzahl ist, erlaubt der Boden den Übergang des Moments und es erfolgt Umkehrung der Auswahl des langsamen Rads,
e) wenn die zwei Drehzahlen langsames Rad und schnelles Rad während einer bestimmten Zeitspanne, die von dem Gefälle abhängt, auf ihren Drehzahlsollwerten sind, haftet der Boden nicht und es erfolgt Radwechsel,
f) wenn die Geschwindigkeit des Fahrzeugs während einer Zeit länger als ein vorbestimmter Wert in Sekunden gleich 0 ist, wird der Radwechsel auferlegt.

7. Gleitschutzvorrichtung, **dadurch gekennzeichnet, dass** sie Mittel zum Umsetzen des Verfahrens nach einem der vorhergehenden Ansprüche aufweist.

8. Kraftfahrzeug, **dadurch gekennzeichnet, dass** es Mittel zum Umsetzen des Verfahrens nach einem der Ansprüche 1 bis 6 aufweist.
